# EUROPÄISCHE PATENTANMELDUNG

(11) **EP 4 728 861 A1**
(43) Veröffentlichungstag der Anmeldung: **22.04.2026**
(21) Anmeldenummer: 24206951.6
(22) Anmeldetag: 16.10.2024
(51) Int. Cl.: A01M 1/14, A01M 1/02

(54) **ÜBERWACHEN VON GLIEDERFÜSSERN**

(71) Anmelder: Bayer Aktiengesellschaft, 51373 Leverkusen (DE)
(72) Erfinder: BORN, Fabian Christian, 57319 Bad Berleburg (DE); TEMPEL, Matthias, 50935 Köln (DE); KLEINSCHROTH, Lukas, 51371 Leverkusen (DE)
(74) Vertreter: BIP Patents

(57) **Zusammenfassung**

Die vorliegende Offenbarung befasst sich mit dem Überwachen von Gliederfüßern auf Basis von Bildaufnahmen.

Gegenstände der vorliegenden Offenbarung sind ein Faltbogen, ein Gehäuse, ein System und ein Verfahren.

## Beschreibung

### TECHNISCHES GEBIET

Die vorliegende Offenbarung befasst sich mit dem Überwachen von Gliederfüßern auf Basis von Bildaufnahmen.

Gegenstände der vorliegenden Offenbarung sind ein Faltbogen, ein Gehäuse, ein System und ein Verfahren.

### EINLEITUNG

Etwa zwei Drittel der gegenwärtig bekannten Tierarten gehören zu den Gliederfüßern (Stamm Arthropoda), die zu 85% von Insekten repräsentiert werden. Ein erheblicher Anteil der Arthropoden ist phytophag: diese Tiere ernähren sich von Pflanzen und können zur Beeinträchtigung des Wachstums führen, Saug- und Fraßschäden verursachen sowie Viruskrankheiten übertragen. Auf diese Weise werden beispielsweise erhebliche Ertrags- und Qualitätsverluste beim Anbau von Nutzpflanzen verursacht.

In der modernen Landwirtschaft spielt die Erfassung und Erkennung von Schädlingen innerhalb von landwirtschaftlich genutzten Flächen eine wichtige Rolle.

### ZUSAMMENFASSUNG

Diesen und weiteren Aspekten widmet sich die vorliegende Offenbarung.

Ein erster Gegenstand der vorliegenden Offenbarung ist ein Gehäuse zur Aufnahme einer Klebefläche, wobei das Gehäuse umfasst:
- eine ebene Grundfläche,
- eine Dachfläche,
- mindestens eine Wandung,
   - wobei die mindestens eine Wandung an die Grundfläche und an die Dachfläche angrenzt,
   - wobei die Grundfläche, die mindestens eine Wandung und die Dachfläche ein Volumen eingrenzen,
   - wobei die Dachfläche drei Teilflächen umfasst, eine erste Teilfläche und zwei zweite Teilflächen, wobei die erste Teilfläche parallel zur Grundfläche verläuft und die zwei zweiten Teilflächen in einem Winkel von 5° bis 120° zur Grundfläche verlaufen,
   - wobei die erste Teilfläche eine Öffnung umfasst.

Ein weiterer Gegenstand der vorliegenden Offenbarung ist ein System umfassend
- ein Gehäuse zur Aufnahme einer Klebefläche,
- eine Klebefläche,
- eine Bildaufnahmevorrichtung,
wobei das Gehäuse umfasst:
- eine ebene Grundfläche,
- eine Dachfläche,
- mindestens eine Wandung,
   - wobei die mindestens eine Wandung an die Grundfläche und an die Dachfläche angrenzt,
   - wobei die Grundfläche, die mindestens eine Wandung und die Dachfläche ein Volumen eingrenzen,
   - wobei die Dachfläche drei Teilflächen umfasst, eine erste Teilfläche und zwei zweite Teilflächen, wobei die erste Teilfläche parallel zur Grundfläche verläuft und die zwei zweiten Teilflächen in einem Winkel von 5° bis 120° zur Grundfläche verlaufen,
   - wobei die erste Teilfläche eine Öffnung umfasst.

Ein weiterer Gegenstand der vorliegenden Offenbarung ist ein Verfahren umfassend:
- Bereitstellen eines Gehäuses für eine Klebfläche, wobei das Gehäuse umfasst:
   - eine ebene Grundfläche,
   - eine Dachfläche,
   - mindestens eine Wandung,
      ∘ wobei die mindestens eine Wandung an die Grundfläche und an die Dachfläche angrenzt,
      ∘ wobei die Grundfläche, die mindestens eine Wandung und die Dachfläche ein Volumen eingrenzen,
      ∘ wobei die Dachfläche drei Teilflächen umfasst, eine erste Teilfläche und zwei zweite Teilflächen, wobei die erste Teilfläche parallel zur Grundfläche verläuft und die zwei zweiten Teilflächen in einem Winkel von 5° bis 120° zur Grundfläche verlaufen,
      ∘ wobei die erste Teilfläche eine Öffnung umfasst,
- Platzieren einer Klebefläche auf der ebenen Grundfläche innerhalb des Volumens,
- Platzieren einer Bildaufnahmevorrichtung oberhalb der ersten Teilfläche der Dachfläche außerhalb des Volumens oberhalb der Öffnung der ersten Teilfläche.

Ein weiterer Gegenstand der vorliegenden Offenbarung ist ein Faltbogen zum Erzeugen eines Gehäuses für eine Klebefläche, wobei der Faltbogen ein einstückiges, zusammenhängendes Gebilde ist, wobei der Faltbogen umfasst:
- eine ebene Grundfläche,
- eine Dachfläche,
- mindestens eine Wandungsfläche,

wobei die Dachfläche drei Teilflächen umfasst, eine erste Teilfläche, eine zweite Teilfläche und eine dritte Teilfläche,
wobei eine erste Wandungsfläche über einen Falz an die Grundfläche angrenzt,
wobei die zweite Teilfläche über einen Falz an die erste Wandungsfläche angrenzt,
wobei die erste Teilfläche über einen Falz an die zweite Teilfläche angrenzt,
wobei die dritte Teilfläche über einen Falz an die erste Teilfläche angrenzt.
wobei erste Teilfläche eine Öffnung und/oder eine Perforation und/oder Stanzung und/oder Kerbung zum Erzeugen einer Öffnung umfasst.

### KURZE BESCHREIUNG DER ZEICHNUNGEN

Fig. 1 zeigt schematisch eine Ausführungsform des Gehäuses der vorliegenden Offenbarung.
Fig. 2 zeigt eine weitere Ausführungsform des Gehäuses der vorliegenden Offenbarung.
Fig. 3 zeigt eine weitere Ausführungsform des Gehäuses der vorliegenden Offenbarung.
Fig. 4 zeigt schematisch eine Ausführungsform des Faltbogens der vorliegenden Offenbarung.
Fig. 5 zeigt schematisch eine Ausführungsform einer Bildaufnahmevorrichtung.
Fig. 6 zeigt schematisch eine Ausführungsform des Systems der vorliegenden Offenbarung zum Überwachen von Gliederfüßern.

### AUSFÜHRLICHE OFFENBARUNG

Die Gegenstände der vorliegenden Offenbarung werden im Folgenden näher erläutert, ohne zwischen den Gegenständen der vorliegenden Offenbarung (Gehäuse, System, Faltbogen, Verfahren) zu unterscheiden. Vielmehr sollen die nachfolgenden Ausführungen sinngemäß für alle Gegenstände der Offenbarung gelten, unabhängig davon, in welchem Zusammenhang (Gehäuse, System, Faltbogen, Verfahren) sie beschrieben werden.

Wenn in der vorliegenden Beschreibung oder in den Ansprüchen Schritte in einer Reihenfolge angegeben sind, bedeutet dies nicht unbedingt, dass die Offenbarung auf die angegebene Reihenfolge beschränkt ist. Vielmehr ist es denkbar, dass die Schritte auch in einer anderen Reihenfolge oder auch parallel zueinander ausgeführt werden können, es sei denn, dass zum Beispiel ein Schritt auf einem anderen aufbaut, was erfordert, dass der aufbauende Schritt anschließend ausgeführt wird (dies wird aber im Einzelfall klar). Die angegeben Reihenfolgen sind somit beispielhafte Ausführungsformen der vorliegenden Offenbarung.

Die Gegenstände der vorliegenden Offenbarung werden an einigen Stellen in Bezug auf Zeichnungen näher erläutert. Dabei sind in den Zeichnungen konkrete Ausführungsformen mit konkreten Merkmalen und Merkmalskombinationen dargestellt, die in erster Linie der Veranschaulichung dienen; die vorliegende Offenbarung soll nicht so verstanden werden, dass sie auf die in den Zeichnungen dargestellten Merkmale und Merkmalskombinationen beschränkt ist. Ferner sollen Aussagen, die bei der Beschreibung der Zeichnungen in Bezug auf Merkmale und Merkmalskombinationen getroffen werden, allgemein gelten, das heißt auch auf andere Ausführungsformen übertragbar und nicht auf die gezeigten Ausführungsformen beschränkt sein.

Der Artikel "ein" bedeutet "ein oder mehrere"; es sei denn es steht ein "nur" oder "lediglich" davor. Dies gilt analog auch für den Artikel "eine".

Die Ausdrücke "basierend auf" und "auf Basis von" bedeuten "zumindest teilweise basierend auf", sofern nicht ausdrücklich etwas anderes angegeben ist.

Der Begriff "oder" ist nicht als exklusives "oder" zu verstehen, d.h. der Ausdruck "A oder B" umfasst "A", "B" sowie "A und B".

Ansonsten haben die in dieser Offenbarung verwendeten Begriffe die Bedeutung, die sie im Stand der Technik, insbesondere in dem in dieser Offenbarung angeführten Stand der Technik, haben.

Ein Gegenstand der vorliegenden Offenbarung ist ein Gehäuse. Das Gehäuse dient zur Aufnahme einer Klebefläche. Das Gehäuse definiert ein Volumen, in dem die Klebefläche platziert werden kann. Das Gehäuse dient dem Schutz der Klebefläche z.B. vor Niederschlag, direkter Bestrahlung durch Sonnenlicht, Schmutz sowie Tieren und/oder Pflanzen, die größer als Gliederfüßer sind.

Die Klebefläche dient dem Immobilisieren von Gliederfüßern. Die Klebefläche ist vorzugsweise eben (planar). Die Klebefläche kann zum Beispiel durch eine Tafel oder Karte (oder einem anderen Klebekörper) bereitgestellt werden, die mit einem Klebemittel, zum Beispiel einem Leim, beschichtet ist. Die Klebefläche kann rund (z.B. kreisförmig), elliptisch, dreieckig, viereckig, fünfeckig, sechseckig, siebeneckig, achteckig oder allgemein n-eckig sein, wobei n eine ganze Zahl sein kann, die größer als 2 ist. Die Klebefläche kann symmetrisch oder unsymmetrisch sein. In einer Ausführungsform der vorliegenden Offenbarung hat die Klebefläche die Form eines Rechtecks, wobei die Ecken abgerundet sein können. In einer Ausführungsform der vorliegenden Offenbarung entspricht das Seitenverhältnis der rechteckigen Klebefläche dem Seitenverhältnis eines Bildsensors der Bildaufnahmevorrichtung.

In einer Ausführungsform der vorliegenden Offenbarung hat die Klebefläche eine Ausdehnung im Bereich von 100 mm x 200 mmm bis 200 mm x 250 mm.

In einer weiteren Ausführungsform der vorliegenden Offenbarung hat die Klebefläche eine Ausdehnung im Bereich von 100 mm x 160 mmm bis 130 mm x 190 mm.

In einer weiteren Ausführungsform der vorliegenden Offenbarung hat die Klebefläche eine Ausdehnung im Bereich von 160 mm x 210 mmm bis 180 mm x 230 mm.

Das Gehäuse umfasst eine Grundfläche. Die Klebefläche wird üblicherweise auf der Grundfläche platziert. Dementsprechend entspricht die Form der Grundfläche üblicherweise der Form der Klebefläche (siehe oben). Üblicherweise ist die Grundfläche größer als die Klebefläche.

In einer Ausführungsform der vorliegenden Offenbarung hat die Grundfläche eine Größe von 180 mm x 230 mm bis 200 mm x 250 mm.

In einer weiteren Ausführungsform der vorliegenden Offenbarung hat die Grundfläche eine Größe von 185 mm x 235 mm bis 195 mm x 245 mm.

Die Grundfläche des Gehäuses ist eben. Wird eine Klebefläche in das Gehäuse eingebracht und das Gehäuse umfassend die Klebefläche z.B. in einem Bereich, in dem Nutzpflanzen angebaut werden, positioniert, um Gliederfüßer in diesem Bereich zu immobilisieren und/oder zu überwachen, ist die ebene Grundfläche des Gehäuses üblicherweise horizontal ausgerichtet. Das heißt, die Flächennormale der Grundfläche (ein zur Grundfläche senkrecht stehender Vektor) zeigt in Richtung der Schwerkraft.

Das Gehäuse umfasst mindestens eine Wandung. Die Zahl der Wandungen kann 1, 2, 3, 4, 5, 6, 7, 8, 9, 10 oder mehr als 10 sein. Üblicherweise umfasst das Gehäuse mindestens zwei Wandungen. Die zwei Wandungen können zum Beispiel an gegenüberliegenden Seiten der Grundfläche an die Grundfläche angrenzen. In einer Ausführungsform der vorliegenden Offenbarung umfasst das Gehäuse 2 Wandungen. In einer weiteren Ausführungsform der vorliegenden Offenbarung umfasst das Gehäuse 3 Wandungen. In einer Ausführungsform der vorliegenden Offenbarung umfasst das Gehäuse 4 Wandungen.

Üblicherweise steigt die Zahl der Wandungen mit der Zahl der Ecken der Form der Grundfläche. Ist die Grundfläche beispielsweise rund oder elliptisch, kann die Grundfläche eine einzige Wandung aufweisen, die zumindest anteilig um die Grundfläche herumlaufen kann.

Ist die Grundfläche viereckig, kann die Grundfläche eine, zwei, drei oder vier Wandungen aufweisen, wobei jede Wandung an eine Seite der Grundfläche angrenzen kann.

Üblicherweise schließt eine Wandung mit der Grundfläche einen Winkel im Bereich von 20° bis 160° ein.

Die Winkelangaben in dieser Offenbarung beziehen sich dabei auf die Winkel innerhalb des Volumens, der durch Grundfläche, Wandungen und Dachfläche definiert wird.

In einer Ausführungsform schließt jede Wandung mit der Grundfläche einen Winkel im Bereich von 30° bis 150° ein. In einer weiteren Ausführungsform schließt jede Wandung mit der Grundfläche einen Winkel im Bereich von 40° bis 140° ein. In einer weiteren Ausführungsform schließt jede Wandung mit der Grundfläche einen Winkel im Bereich von 50° bis 130° ein. In einer weiteren Ausführungsform schließt jede Wandung mit der Grundfläche einen Winkel im Bereich von 60° bis 120° ein. In einer weiteren Ausführungsform schließt jede Wandung mit der Grundfläche einen Winkel im Bereich von 70° bis 110° ein. In einer weiteren Ausführungsform schließt jede Wandung mit der Grundfläche einen Winkel im Bereich von 80° bis 100° ein. In einer weiteren Ausführungsform schließt jede Wandung mit der Grundfläche einen Winkel im Bereich von 70° bis 90° ein. In einer weiteren Ausführungsform schließt jede Wandung mit der Grundfläche einen Winkel im Bereich von 80° bis 90° ein. In einer weiteren Ausführungsform schließt jede Wandung mit der Grundfläche einen Winkel im Bereich von 90° bis 120° ein. In einer weiteren Ausführungsform schließt jede Wandung mit der Grundfläche einen Winkel im Bereich von 90° bis 110° ein.

In einer Ausführungsform ist die Grundfläche rechteckig und das Gehäuse umfasst vier Wandungen, zwei erste Wandungen und zwei zweite Wandungen, wobei die ersten Wandungen an gegenüberliegenden Seiten der Grundfläche angrenzen und die zweiten Wandungen an den zwei anderen gegenüberliegenden Seiten der Grundfläche angrenzen, wobei die ersten Wandungen mit der Grundfläche einen Winkel von 90° bis 110° einschließen und wobei die zweiten Wandungen mit der Grundfläche einen Winkel von 85° bis 95° einschließen.

Die mindestens eine Wandung des Gehäuses kann eine oder mehrere Öffnungen aufweisen. Eine Öffnung kann dazu dienen, Gliederfüßern einen Zugang und/oder Zuflug zum Inneren des Gehäuses zu ermöglichen.

Die Öffnungen können eine beliebige Form aufweisen. Sie können beispielsweise rund (z.B. kreisförmig), elliptisch oder n-eckig sein, wobei n eine ganze Zahl sein kann, die größer als 2 ist. Die Öffnungen können die Form eines Vierecks (z.B. eines Rechtecks) oder eines anderen n-Ecks aufweisen, wobei die Ecken abgerundet sein können.

In einer Ausführungsform der vorliegenden Offenbarung sind Öffnungen in Wandungen rund (z.B. kreisförmig).

Das Gehäuse umfasst eine Dachfläche. Üblicherweise verbinden eine oder mehrere Wandungen die Grundfläche mit der Dachfläche. Mit anderen Worten: die mindestens eine Wandung grenzt an die Grundfläche und an die Dachfläche an.

Die Grundfläche, die mindestens eine Wandung und die Dachfläche definieren ein Volumen. Dieses Volumen ist der Innenbereich (das Innere) des Gehäuses. Mit anderen Worten: die Grundfläche, die mindestens eine Wandung und die Dachfläche grenzen ein Volumen ein. Mit anderen Worten: die Grundfläche, die mindestens eine Wandung und die Dachfläche grenzen ein Volumen gegenüber der Außenwelt ab, wobei eine oder mehrere Öffnungen in der mindestens einen Wandung einen Zugang/Zuflug von Gliederfüßern in das Volumen innerhalb des Gehäuses ermöglichen.

In einer Ausführungsform der vorliegenden Offenbarung ist die Dachfläche größer als die Grundfläche. In einer Ausführungsform überragt die Dachfläche mindestens eine Wandung. In einer Ausführungsform überragt die Dachfläche mindestens zwei Wandungen.

Die Dachfläche umfasst drei Teilflächen. Mindestens eine der Teilflächen ist eben (planar) und verläuft parallel zur Grundfläche. Diese Teilfläche wird in dieser Beschreibung (willkürlich) als die erste Teilfläche bezeichnet. Die Grundfläche und die erste Teilfläche der Dachfläche weisen einen Abstand voneinander auf. Dieser Abstand kann zumindest anteilig durch die Formen und Größen der Wandungen und der Teilflächen der Dachfläche sowie den Winkel zwischen den Wandungen und der Grundfläche, zwischen den Wandungen und den Teilflächen der Dachfläche und zwischen den Teilflächen der Dachfläche bestimmt werden. Vereinfachend kann gesagt werden, dass die Wandungen zumindest anteilig für einen definierten Abstand zwischen der Grundfläche und der ersten Teilfläche der Dachfläche sorgen.

In einer Ausführungsform liegt der Abstand zwischen der ersten Teilfläche der Dachfläche und der Grundfläche im Bereich von 5 cm bis 20 cm. In einer weiteren Ausführungsform liegt der Abstand zwischen der ersten Teilfläche und der Grundfläche im Bereich von 6 cm bis 20 cm. In einer weiteren Ausführungsform liegt der Abstand zwischen der ersten Teilfläche und der Grundfläche im Bereich von 7 cm bis 20 cm. In einer weiteren Ausführungsform liegt der Abstand zwischen der ersten Teilfläche und der Grundfläche im Bereich von 7 cm bis 19 cm. In einer weiteren Ausführungsform liegt der Abstand zwischen der ersten Teilfläche und der Grundfläche im Bereich von 7 cm bis 18 cm. In einer weiteren Ausführungsform liegt der Abstand zwischen der ersten Teilfläche und der Grundfläche im Bereich von 7 cm bis 17 cm. In einer weiteren Ausführungsform liegt der Abstand zwischen der ersten Teilfläche und der Grundfläche im Bereich von 7 cm bis 16 cm. In einer weiteren Ausführungsform liegt der Abstand zwischen der ersten Teilfläche und der Grundfläche im Bereich von 7 cm bis 15 cm. In einer weiteren Ausführungsform liegt der Abstand zwischen der ersten Teilfläche und der Grundfläche im Bereich von 5 cm bis 14 cm. In einer weiteren Ausführungsform liegt der Abstand zwischen der ersten Teilfläche und der Grundfläche im Bereich von 7 cm bis 13 cm. In einer weiteren Ausführungsform liegt der Abstand zwischen der ersten Teilfläche und der Grundfläche im Bereich von 7 cm bis 12 cm. In einer weiteren Ausführungsform liegt der Abstand zwischen der ersten Teilfläche und der Grundfläche im Bereich von 8 cm bis 12 cm.

In einer Ausführungsform der vorliegenden Offenbarung entspricht die Form der ersten Teilfläche der Form der Grundfläche. In einer Ausführungsform der vorliegenden Offenbarung hat die erste Teilfläche eine rechteckige Form.

In einer Ausführungsform ist die Grundfläche größer als die erste Teilfläche. In einer anderen Ausführungsform ist die Grundfläche kleiner als die erste Teilfläche.

In einer Ausführungsform grenzen zwei Teilflächen der Dachfläche an die erste Teilfläche der Dachfläche an. In einer Ausführungsform schließen zwei Teilflächen der Dachfläche die ersten Teilfläche der Dachfläche ein, d.h. die grenzen an gegenüberliegenden Seiten der ersten Teilfläche an diese an. In einer Ausführungsform ist die erste Teilfläche der Dachfläche rechteckig und an zwei gegenüberliegenden Seiten der ersten Teilfläche grenzen zwei zweite Teilflächen der Dachfläche an.

In einer Ausführungsform sind die zwei zweiten Teilflächen der Dachfläche eben (planar). In einer Ausführungsform sind die zwei zweiten Teilflächen der Dachfläche vom Inneren des Gehäuses gesehen nach außen gewölbt. In einer Ausführungsform sind die zwei zweiten Teilflächen der Dachfläche vom Inneren des Gehäuses gesehen nach innen gewölbt.

In einer Ausführungsform sind die zwei zweiten Teilflächen eben und verlaufen jeweils in einem Winkel von 5° bis 120° zur Grundfläche. In einer weiteren Ausführungsform verlaufen die zwei zweiten Teilflächen jeweils in einem Winkel von 5° bis 90° zur Grundfläche. In einer weiteren Ausführungsform verlaufen die zwei zweiten Teilflächen jeweils in einem Winkel von 5° bis 60° zur Grundfläche. In einer weiteren Ausführungsform verlaufen die zwei zweiten Teilflächen jeweils in einem Winkel von 5° bis 45° zur Grundfläche. In einer weiteren Ausführungsform verlaufen die zwei zweiten Teilflächen jeweils in einem Winkel von 5° bis 30° zur Grundfläche.

In einer Ausführungsform sind die zwei zweiten Teilflächen der Dachfläche eben (planar), grenzen an gegenüberliegenden Seiten der rechteckigen ersten Teilfläche an die rechteckige erste Teilfläche an und schließen jeweils mit der ersten Teilfläche einen Winkel im Bereich von 90° bis 175° ein. In einer Ausführungsform sind die zwei zweiten Teilflächen der Dachfläche eben (planar), grenzen an gegenüberliegenden Seiten der rechteckigen ersten Teilfläche an die rechteckige erste Teilfläche an und schließen jeweils mit der ersten Teilfläche einen Winkel im Bereich von 120° bis 175° ein. In einer Ausführungsform sind die zwei zweiten Teilflächen der Dachfläche eben (planar), grenzen an gegenüberliegenden Seiten der rechteckigen ersten Teilfläche an die rechteckige erste Teilfläche an und schließen jeweils mit der ersten Teilfläche einen Winkel im Bereich von 135° bis 175° ein. In einer Ausführungsform sind die zwei zweiten Teilflächen der Dachfläche eben (planar), grenzen an gegenüberliegenden Seiten der rechteckigen ersten Teilfläche an die rechteckige erste Teilfläche an und schließen jeweils mit der ersten Teilfläche einen Winkel im Bereich von 150° bis 175° ein.

In einer Ausführungsform der vorliegenden Offenbarung definieren Grundfläche, mindestens eine Wandung und Dachfläche ein Gehäuse (das an ein Haus erinnert), bei dem das Dach die Form eines Mansardflachdaches hat. Dabei bildet die erste Teilfläche den flachen Teil des Mansardflachdaches.

Die erste Teilfläche stellt eine Fläche bereit, auf oder über der eine Bildaufnahmevorrichtung platziert werden kann.

Die erste Teilfläche weist eine Öffnung auf. In dem System der vorliegenden Offenbarung wird oberhalb der Öffnung eine Bildaufnahmevorrichtung positioniert. Dabei wird die Bildaufnahmevorrichtung so positioniert, dass elektromagnetische Strahlung vom Inneren des Gehäuses durch die Öffnung auf einen Bildsensor der Bildaufnahmevorrichtung treffen kann. Die Bildaufnahmevorrichtung wird so positioniert, dass elektromagnetische Strahlung, die von der Grundfläche oder einer Klebefläche (falls vorhanden) reflektiert, gestreut und/oder gebeugt wird, durch die Öffnung auf den Bildsensor der Bildaufnahmevorrichtung treffen kann. Die Öffnung in der ersten Teilfläche dient also dazu, dass elektromagnetische Strahlung vom Inneren des Gehäuses durch die Öffnung nach außen (außerhalb des Gehäuses) treten kann. Die Öffnung in der ersten Teilfläche dient also dazu, dass elektromagnetische Strahlung, die von der Grundfläche oder einer Klebefläche reflektiert, gestreut und/oder gebeugt wird, durch die Öffnung nach außen (außerhalb des Gehäuses) treten kann.

Die Öffnung in der ersten Teilfläche kann rund (z.B. kreisförmig), elliptisch oder n-eckig sein, wobei n eine ganze Zahl sein kann, die größer als 2 ist. Ist die Öffnung n-eckig, können die Ecken abgerundet sein. In einer Ausführungsform der vorliegenden Offenbarung ist die Öffnung zumindest anteilig kreisförmig.

Üblicherweise wird die Bildaufnahmevorrichtung außerhalb des Gehäuses auf der ersten Teilfläche oder oberhalb der ersten Teilfläche positioniert, so dass die Bildaufnahmevorrichtung "von außen" Bildaufnahmen des Innenbereichs des Gehäuses erzeugt.

Das Gehäuse kann aus Papier, Pappe, Kunststoff, Metall, Glas und/oder einem Verbundwerkstoff gefertigt sein. Die Grundfläche, die mindestens eine Wandung und/oder die Dachfläche können aus dem gleichen Material gefertigt sein oder aus verschiedenen Materialien gefertigt sein. In einer Ausführungsform sind Grundfläche, die mindestens eine Wandung und die Dachfläche aus dem gleichen Material gefertigt.

In einer Ausführungsform ist das Gehäuse aus einem Kunststoff gefertigt. In einer Ausführungsform ist das Gehäuse aus einem Polymerwerkstoff gefertigt. In einer Ausführungsform ist das Gehäuse aus einem Polyproplyen gefertigt.

In einer Ausführungsform ist das Material des Gehäuses zumindest teilweise für elektromagnetische Strahlung im sichtbaren Bereich des elektromagnetischen Spektrums transparent.

In einer Ausführungsform ist zumindest das Material der Dachfläche des Gehäuses zumindest teilweise für elektromagnetische Strahlung im sichtbaren Bereich des elektromagnetischen Spektrums transparent.

Der Transmissionsgrad kann beispielsweise größer als 10% oder größer als 20% oder größer als 30% oder größer als 40% oder größer als 50% oder größer als 60% oder größer als 70% oder größer als 80% oder größer als 90% sein.

Unter dem sichtbaren Bereich des elektromagnetischen Spektrums wird der Bereich von 380 nm bis 780 nm verstanden.

In einer Ausführungsform sind Grundfläche, Wandungen und/oder Dachfläche aus Kunststoffstegplatten gefertigt. In einer Ausführungsform sind Grundfläche, Wandungen und/oder Dachfläche aus Kunststoffhohlkammerplatten gefertigt. In einer Ausführungsform sind Grundfläche, Wandungen und Dachfläche aus Polypropylenstegplatten gefertigt.

In einer Ausführungsform haben die Platten, die durch Stege miteinander verbunden sind, einen Abstand von 1 mm bis 6 mm voneinander. In einer Ausführungsform haben die Stege, die die Platten miteinander verbinden, einen Abstand von 1 mm bis 6 mm voneinander.

In einer Ausführungsform haben die Platten, die durch Stege miteinander verbunden sind, einen Abstand von 1 mm bis 5 mm voneinander. In einer Ausführungsform haben die Stege, die die Platten miteinander verbinden, einen Abstand von 1 mm bis 5 mm voneinander.

In einer Ausführungsform haben die Platten, die durch Stege miteinander verbunden sind, einen Abstand von 2 mm bis 4 mm voneinander. In einer Ausführungsform haben die Stege, die die Platten miteinander verbinden, einen Abstand von 2 mm bis 4 mm voneinander.

In einer Ausführungsform haben die Platten und die Stege eine Dicke (Wandstärke) von 0,2 mm bis 3 mm. In einer Ausführungsform haben die Platten und die Stege eine Dicke (Wandstärke) von 0,3 mm bis 2 mm. In einer Ausführungsform haben die Platten und die Stege eine Dicke (Wandstärke) von 0,4 mm bis 1 mm.

In einer Ausführungsform verlaufen die Stege der Stegplatten parallel zu zwei Seiten der Grundfläche.

In der vorliegenden Offenbarung werden Klebefläche, Grundfläche, Wandungsflächen, Dachfläche und Teilflächen als Flächen bezeichnet - auch wenn sie von dreidimensionalen Körpern bereitgestellt werden.

Diese Bezeichnung soll darauf hinweisen, dass die dreidimensionalen Körper Ausdehnungen in zwei Dimensionen aufweisen, die um ein Vielfaches größer sind als die Ausdehnung in der dritten Dimension.

Die Grundfläche ist also eine Fläche, die Teil eines Grundkörpers ist. Der Grundkörper bildet den Boden des Gehäuses. Jede Wandungsfläche ist Teil einer Wandung. Die Wandungen bilden die Wände des Gehäuses. Die Dachfläche ist Teil eines Dachkörpers. Der Dachkörper bildet das Dach des Gehäuses. Jede Teilfläche der Dachfläche ist ein Teilkörper des Dachkörpers. Die Klebefläche ist Teil eines Klebekörpers, beispielsweise einer mit einem Klebemittel (z.B. Leim) beschichteten Tafel oder Karte.

In einer Ausführungsform hat der Grundkörper eine Dicke (Wandstärke) im Bereich von 1 mm bis 8 mm. In einer Ausführungsform hat der Grundkörper eine Dicke (Wandstärke) im Bereich von 2 mm bis 7 mm. In einer Ausführungsform hat der Grundkörper eine Dicke (Wandstärke) im Bereich von 2 mm bis 6 mm. In einer Ausführungsform hat der Grundkörper eine Dicke (Wandstärke) im Bereich von 2 mm bis 5 mm. In einer Ausführungsform hat der Grundkörper eine Dicke (Wandstärke) im Bereich von 3 mm bis 6 mm. In einer Ausführungsform hat der Grundkörper eine Dicke (Wandstärke) im Bereich von 3 mm bis 5 mm.

In einer Ausführungsform hat der Dachkörper eine Dicke (Wandstärke) im Bereich von 1 mm bis 8 mm. In einer Ausführungsform hat der Dachkörper eine Dicke (Wandstärke) im Bereich von 2 mm bis 7 mm. In einer Ausführungsform hat der Dachkörper eine Dicke (Wandstärke) im Bereich von 2 mm bis 6 mm. In einer Ausführungsform hat der Dachkörper eine Dicke (Wandstärke) im Bereich von 2 mm bis 5 mm. In einer Ausführungsform hat der Dachkörper eine Dicke (Wandstärke) im Bereich von 3 mm bis 6 mm. In einer Ausführungsform hat der Dachkörper eine Dicke (Wandstärke) im Bereich von 3 mm bis 5 mm.

In einer Ausführungsform hat die mindestens eine Wandung eine Dicke (Wandstärke) im Bereich von 1 mm bis 8 mm. In einer Ausführungsform hat die mindestens eine Wandung eine Dicke (Wandstärke) im Bereich von 2 mm bis 7 mm. In einer Ausführungsform hat die mindestens eine Wandung eine Dicke (Wandstärke) im Bereich von 2 mm bis 6 mm. In einer Ausführungsform hat d die mindestens eine Wandung eine Dicke (Wandstärke) im Bereich von 2 mm bis 6 mm. In einer Ausführungsform hat die mindestens eine Wandung eine Dicke (Wandstärke) im Bereich von 3 mm bis 6 mm. In einer Ausführungsform hat die mindestens eine Wandung eine Dicke (Wandstärke) im Bereich von 3 mm bis 5 mm.

In einer Ausführungsform der vorliegenden Offenbarung kann das Gehäuse aus einem Faltbogen erzeugt werden. In einer Ausführungsform der vorliegenden Offenbarung kann das Gehäuse aus einem Faltbogen ohne Klebemittel erzeugt werden.

Ein weiterer Gegenstand der vorliegenden Offenbarung ist ein Faltbogen zum Erzeugen eines Gehäuses für eine Klebefläche.

Der Faltbogen ist ein einstückiges, zusammenhängendes Gebilde. Der Faltbogen umfasst eine ebene Grundfläche, eine Dachfläche und mindestens eine Wandungsfläche.

Die Grundfläche, die Dachfläche und die mindestens eine Wandungsfläche sind über Falze miteinander verbunden. Mit anderen Worten: der Faltbogen ist durch Falze in verschiedene Teilbögen unterteilt. Entlang der Falze lässt sich der Faltbogen falten, um die Winkel zwischen den Teilbögen zu verändern.

In einer Ausführungsform verlaufen alle Falze entlang gerader Linien.

In einer Ausführungsform verlaufen alle Falze parallel oder senkrecht zueinander.

Im ursprünglichen Zustand schließen benachbarte Teilbögen einen Winkel von 180°ein, so dass der Faltbogen insgesamt ein flächiges Gebilde ist. In einer Ausführungsform hat der Faltbogen eine Dicke (Wandstärke) im Bereich von 1 mm bis 8 mm. In einer Ausführungsform hat der Faltbogen eine Dicke (Wandstärke) im Bereich von 2 mm bis 7 mm. In einer Ausführungsform hat der Faltbogen eine Dicke (Wandstärke) im Bereich von 2 mm bis 6 mm. In einer Ausführungsform hat der Faltbogen eine Dicke (Wandstärke) im Bereich von 2 mm bis 5 mm. In einer Ausführungsform hat der Faltbogen eine Dicke (Wandstärke) im Bereich von 3 mm bis 6 mm.

In einer Ausführungsform ist der Faltbogen aus einer Polypropylenstegplatte gefertigt.

In einer Ausführungsform haben die Platten, die durch Stege miteinander verbunden sind, einen Abstand von 1 mm bis 6 mm voneinander. In einer Ausführungsform haben die Stege, die die Platten miteinander verbinden, einen Abstand von 1 mm bis 6 mm voneinander.

In einer Ausführungsform haben die Platten, die durch Stege miteinander verbunden sind, einen Abstand von 1 mm bis 5 mm voneinander. In einer Ausführungsform haben die Stege, die die Platten miteinander verbinden, einen Abstand von 1 mm bis 5 mm voneinander.

In einer Ausführungsform haben die Platten, die durch Stege miteinander verbunden sind, einen Abstand von 2 mm bis 4 mm voneinander. In einer Ausführungsform haben die Stege, die die Platten miteinander verbinden, einen Abstand von 2 mm bis 4 mm voneinander.

In einer Ausführungsform haben die Platten und die Stege eine Dicke (Wandstärke) von 0,2 mm bis 3 mm. In einer Ausführungsform haben die Platten und die Stege eine Dicke (Wandstärke) von 0,3 mm bis 2 mm. In einer Ausführungsform haben die Platten und die Stege eine Dicke (Wandstärke) von 0,4 mm bis 1 mm.

In einer Ausführungsform verlaufen die Stege parallel zu zwei Seiten der Grundfläche.

In einer Ausführungsform werden Grundfläche, mindestens eine Wandungsfläche und/oder Dachfläche durch Falze voneinander getrennt.

Die Grundfläche ist durch mindestens einen Falz von mindestens einer Wandungsfläche getrennt. Mit anderen Worten: zwischen der Grundfläche und mindestens einer Wandungsfläche verläuft ein Falz, entlang dem der Winkel zwischen Grundfläche und Wandungsfläche verändert werden kann. Mit anderen Worten: die Grundfläche ist über einen Falz mit einer Wandungsfläche verbunden.

Die Wandungsfläche, die mit der Grundfläche über einen Falz verbunden ist, wird in dieser Offenbarung willkürlich als die erste Wandungsfläche bezeichnet.

Die Dachfläche des Faltbogens umfasst drei Teilflächen, eine erste Teilfläche, eine zweite Teilfläche und eine dritte Teilfläche. Die erste Teilfläche der Dachfläche des Faltbogens entspricht der ersten Teilfläche der Dachfläche des Gehäuses. Die zweite und dritte Teilfläche der Dachfläche des Faltbogens entsprechen den zwei zweiten Teilflächen der Dachfläche des Gehäuses; im Fall des Gehäuses wurden diese nicht weiter unterschieden.

Die zweite Teilfläche der Dachfläche des Faltbogens ist über einen Falz mit der ersten Wandungsfläche verbunden.

Die erste Teilfläche der Dachfläche des Faltbogens ist über einen Falz mit der zweite Teilfläche der Dachfläche des Faltbogens verbunden.

Die dritte Teilfläche der Dachfläche des Faltbogens ist über einen Falz mit der ersten Teilfläche der Dachfläche des Faltbogens verbunden.

In einer Ausführungsform verläuft der Falz zwischen der zweiten Teilfläche der Dachfläche und der ersten Wandungsfläche parallel zu dem Falz zwischen zweiten Teilfläche der Dachfläche und der ersten Teilfläche der Dachfläche.

In einer Ausführungsform verläuft der Falz zwischen der zweiten Teilfläche der Dachfläche und der ersten Teilfläche der Dachfläche parallel zu dem Falz zwischen ersten Teilfläche der Dachfläche und der dritten Teilfläche der Dachfläche.

Die mindestens eine Wandungsfläche kann eine oder mehrere Öffnungen aufweisen. Durch diese Öffnungen können Gliederfüßer in den Innenbereich des aus dem Faltbogen erzeugten Gehäuses gelangen. Ferner weist die erste Teilfläche eine Öffnung auf, durch die eine Bildaufnahmevorrichtung von außen Bildaufnahmen des Innenbereichs des aus dem Faltbogen erzeugten Gehäuses erzeugen kann.

Die Öffnungen können beispielsweise durch Ausstanzungen in den Faltbogen eingebracht sein.

In einer Ausführungsform der vorliegenden Offenbarung sind die Öffnungen durch Perforationen und/oder Stanzungen und/oder Kerbungen vordefiniert, so dass die Öffnungen einfach durch einen Nutzer durch Herausdrücken der von den Perforationen und/oder Stanzungen und/oder Kerbungen umrandeten Teile erzeugt werden können.

In einer Ausführungsform der vorliegenden Offenbarung sind Perforationen und/oder Stanzungen und/oder Kerbungen vorhanden, die potenzielle Öffnungen unterschiedlicher Größe definieren, so dass ein Nutzer zwischen verschieden großen Öffnungen wählen kann.

In einer Ausführungsform sind Laschen und Schlitze für Laschen (oder Perforationen und/oder Stanzungen und/oder Kerbungen, die potenzielle Schlitze für Laschen definieren) vorhanden, die es ermöglichen, aus dem Faltbogen das Gehäuse zu erzeugen, ohne dass zum Fixieren der Teile des Faltbogens Klebemittel nötig sind.

Ein weiterer Gegenstand der vorliegenden Offenbarung ist ein Verfahren.

Das Verfahren umfasst die Schritte:
- Bereitstellen des Gehäuses der vorliegenden Offenbarung,
- Platzieren einer Klebefläche auf der ebenen Grundfläche des Gehäuses,
- Platzieren einer Bildaufnahmevorrichtung oberhalb der Öffnung der ersten Teilfläche der Dachfläche außerhalb des Gehäuses.

Das Gehäuse kann beispielsweise aus dem Faltbogen der vorliegenden Offenbarung erzeugt werden. Es können Teile, die Öffnungen definieren, durch Herausdrücken aus dem Faltbogen entfernt werden, so dass Öffnungen entstehen. Es ist jedoch auch möglich, dass die Öffnungen bereits in dem Faltbogen vorhanden sind.

Die Klebefläche wird auf der ebenen Grundfläche innerhalb des Gehäuses platziert. Es ist möglich, dass die Klebefläche und/oder der Klebekörper, der die Klebefläche bereitstellt, in einer Farbe gestaltet ist, die (spezifische) Gliederfüßer anlockt. Es ist möglich, dass die Klebefläche und/oder der Klebekörper, der die Klebefläche bereitstellt, mit einem Muster versehen ist, das (spezifische) Gliederfüßer anlockt. Es ist möglich, dass neben oder anstelle einer Farbe und/oder einem Muster ein weiteres/anderes Lockmittel eingesetzt wird, um (spezifische) Gliederfüßer anzulocken. Ein solches Lockmittel kann z.B. ein Pheromon sein.

Das Verfahren der vorliegenden Offenbarung kann als einen weiteren Schritt das Platzieren eines Lockmittels (z.B. eines Pheromons) innerhalb des Gehäuses umfassen.

Oberhalb der ersten Teilfläche der Dachfläche wird eine Bildaufnahmevorrichtung platziert.

Die Bildaufnahmevorrichtung kann dazu verwendet werden, digitale Bildaufnahmen von der Klebefläche oder eines Teils davon zu erzeugen. Die erzeugten Bildaufnahmen können verwendet werden, (i) um zu erkennen, ob sich ein oder mehrere Gliederfüßer in dem abgebildeten Bereich befinden (Detektieren von Gliederfüßern), (ii) die Position eines Gliederfüßers in der Bildaufnahme zu bestimmen (Lokalisieren von Gliederfüßern), (iii) Gliederfüßer in dem abgebildeten Bereich zu zählen und/oder (iv) Gliederfüßer zu identifizieren, d.h. festzustellen, um welchen Gliederfüßer (z.B. Unterklasse, Überordnung, Ordnung, Unterordnung, Familie, Gattung, Art, Stadium, Nützling, Schädling) es sich handelt.

Die Bildaufnahmevorrichtung umfasst eine oder mehrere Kameras.

Eine "Kamera" ist ein Gerät oder System, das dazu bestimmt ist, Bildaufnahmen von Objekten und/oder Phänomenen zu erfassen und aufzuzeichnen. Eine Kamera nutzt dazu beispielsweise elektromagnetische Strahlung, Schallwellen oder andere physikalische Vorgänge, die visuell dargestellt werden können. Die Kamera wandelt empfangene Signale (z.B. optische oder akustische) in andere Signale (z.B. elektrische) und/oder Daten um, die gespeichert, verarbeitet, angezeigt und/oder übertragen werden können. Der Begriff "Kamera" umfasst Geräte, die mit allen Medien oder Technologien arbeiten, einschließlich analoger und digitaler, optischer, elektronischer, chemischer oder anderer Methoden der Bilderfassung. Der Begriff "Kamera" umfasst ein breites Spektrum von Geräten einschließlich, aber nicht beschränkt auf Fotokameras, Videokameras, Wärmebildkameras, Radarsysteme, Ultraschall-Bildgebungsgeräte, Elektronenmikroskope und alle künftigen Technologien, die die Funktion der Bilderfassung erfüllen können.

In einer Ausführungsform der vorliegenden Offenbarung ist die Kamera eine Digitalkamera, die mit Hilfe eines oder mehrerer Bildsensoren zweidimensionale Abbilder aus Licht auf elektrischem Weg erzeugt. Üblicherweise handelt es sich um halbleiterbasierte Bildsensoren wie beispielsweise CCD-(CCD = charge-coupled device) oder CMOS-Sensoren (CMOS = complementary metal-oxidesemiconductor). Optische Elemente wie Linsen, Blenden und dergleichen dienen einer möglichst scharfen Abbildung von Gliederfüßern im Sammelbereich auf dem Bildsensor. Eine Digitalkamera ist konfiguriert, digitale Bildaufnahmen zu erzeugen.

Digitale Bildaufnahmen können mit Computersystemen und Computerprogrammen verarbeitet, bearbeitet und reproduziert sowie in standardisierte Datenformate konvertiert werden, wie zum Beispiel JPEG (Grafikformat der Joint Photographic Experts Group), PNG (Portable Network Graphics) oder SVG (Scalable Vector Graphics). Digitale Bildaufnahmen können mit geeigneten Anzeigegeräten visualisiert werden, wie zum Beispiel mit Computermonitoren, Projektoren und/oder Druckern.

Zur Abbildung der Klebefläche auf einem oder mehreren Bildsensoren ist eine Lichtquelle erforderlich, mit der die Klebefläche beleuchtet wird, so dass Licht (elektromagnetische Strahlung im infraroten, sichtbaren und/oder ultravioletten Bereich des elektromagnetischen Spektrums) von der beleuchteten Klebefläche in Richtung Bildsensor gestreut/reflektiert/gebeugt wird. Hierzu kann das Tageslicht verwendet werden, das durch die teilweise transparenten Wandungen und/oder Dachfläche und/oder Öffnungen in das Innere des Gehäuses gelangt. Es ist aber auch denkbar, eine Beleuchtungseinheit zu verwenden, die für eine definierte, vom Tageslicht unabhängige Beleuchtung sorgt. Diese kann Bestandteil der Bildaufnahmevorrichtung sein und beispielsweise seitlich neben einem Kameraobjektiv angebracht sein, so dass es zu keinem Schattenwurf des Kameraobjektivs auf die Klebefläche kommt. Eine Beleuchtungseinheit ist eine Quelle für elektromagnetische Strahlung.

Es ist auch denkbar, eine Beleuchtungseinheit unterhalb der Klebefläche und/oder neben der Klebefläche zu positionieren, die den Sammelbereich "von unten" und/oder "von der Seite" beleuchtet, während eine Kamera eine oder mehrere Bildaufnahmen "von oben" erzeugt.

Es denkbar, dass mehrere Beleuchtungsquellen die Klebefläche aus unterschiedlichen Richtungen beleuchten.

Die Begriffe "Licht" und "Beleuchtung" sollen im Übrigen nicht bedeuten, dass der Spektralbereich auf sichtbares Licht (etwa 380 nm bis etwa 780 nm) beschränkt ist. Es ist ebenso denkbar, dass zur Beleuchtung elektromagnetische Strahlung mit einer Wellenlänge unterhalb von 380 nm (ultraviolettes Licht: 100 nm bis 380 nm) und/oder oberhalb von 780 nm (infrarotes Licht: 780 nm bis 1000 µm) verwendet wird. Der Bildsensor und die optischen Elemente der Kamera sind üblicherweise an die verwendete elektromagnetische Strahlung angepasst.

Die Bildaufnahmevorrichtung wird üblicherweise außerhalb des Gehäuses platziert. Die Bildaufnahmevorrichtung wird oberhalb der Öffnung in der ersten Teilfläche so platziert, dass elektromagnetische Strahlung, die von der Klebefläche reflektiert, gestreut und/oder gebeut wird, durch die Öffnung auf einen Bildsensor der Bildaufnahmevorrichtung fällt.

In einer Ausführungsform der vorliegenden Offenbarung wird die Bildaufnahmevorrichtung mechanisch mit dem Gehäuse verbunden. In einer Ausführungsform ist die mechanische Verbindung reversibel, d.h. sie kann gelöst und nach Lösen wieder erneuert werden.

In einer Ausführungsform erfolgt die mechanische Verbindung der Bildaufnahmevorrichtung mit dem Gehäuse über einen Verbindungsmittler. Mit anderen Worten: das Gehäuse kann mit einem Verbindungsmittler mechanisch verbunden werden und die Bildaufnahmevorrichtung kann mechanisch mit dem Verbindungsmittler verbunden werden. Sind Gehäuse und Bildaufnahmevorrichtung mit dem Verbindungsmittler mechanisch verbunden, sorgt der Verbindungsmittler dafür, dass Gehäuse und Bildaufnahmevorrichtung zueinander in definierter Weise ausgerichtet und fixiert sind. Mit anderen Worten: der Verbindungsmittler stellt eine mechanische Verbindung zwischen dem Gehäuse und der Bildaufnahmevorrichtung her.

Ist die Bildaufnahmevorrichtung platziert, stellt das System umfassend das Gehäuse, die Klebefläche und die Bildaufnahmevorrichtung ein System zum Überwachen von Gliederfüßern dar. Dieses System ist ein weiterer Gegenstand der vorliegenden Erfindung.

"Gliederfüßer" (Arthropoden) sind eine vielfältige Gruppe wirbelloser Tiere, die zum Stamm der Arthropoda gehören.

Gliederfüßer spielen in Ökosystemen eine wichtige Rolle als Bestäuber, Zersetzer und/oder als Teil des Nahrungsnetzes. Sie können auch von wirtschaftlicher Bedeutung sein, sowohl zum Nutzen (z.B. Bestäubung, Seidenproduktion) als auch zum Nachteil (z.B. als Schädlinge in der Landwirtschaft, Überträger von Krankheiten).

Gliederfüßer werden in mehrere Gruppen (Subphyla und Klassen) eingeteilt, darunter Insekten und Spinnentiere.

In einer Ausführungsform der vorliegenden Offenlegung bezieht sich der Begriff "Gliederfüßer" ausschließlich auf Insekten und Spinnentiere.

In einer anderen Ausführungsform der vorliegenden Offenbarung bezieht sich der Begriff "Gliederfüßer" ausschließlich auf Insekten.

In einer anderen Ausführungsform der vorliegenden Offenbarung bezieht sich der Begriff "Gliederfüßer" ausschließlich auf erwachsene Insekten.

In einer anderen Ausführungsform der vorliegenden Offenbarung bezieht sich der Begriff "Gliederfüßer" ausschließlich auf Insekten in Form von Raupen.

In einer anderen Ausführungsform der vorliegenden Offenbarung bezieht sich der Begriff "Gliederfüßer" ausschließlich auf Spinnentiere.

In einer anderen Ausführungsform der vorliegenden Offenbarung bezieht sich der Begriff "Gliederfüßer" ausschließlich auf Milben.

In einer anderen Ausführungsform der vorliegenden Offenbarung bezieht sich der Begriff "Gliederfüßer" ausschließlich auf Schädlinge für Nutzpflanzen.

Der Begriff "Überwachen" bedeutet üblicherweise, dass mit Hilfe des Systems der vorliegenden Offenbarung die Anwesenheit eines oder mehrerer Gliederfüßer in einem Bereich (z.B. in einem Feld für den Anbau von Kulturpflanzen) festgestellt werden kann

Gliederfüßer, die in das Innere des Gehäuses gelangen, z.B. zufällig oder weil sie durch ein Lockmittel angelockt wurden, werden mit Hilfe der Klebefläche immobilisiert. Mit Hilfe der Bildaufnahmevorrichtung kann eine Bildaufnahme von der Klebefläche und den sich auf der Klebefläche befindlichen Gliederfüßern erzeugt werden.

Die Bildaufnahmevorrichtung kann konfiguriert sein, zu definierten Zeitpunkten und/oder in definierten Zeitabständen und/oder bei Eintreten definierter Ereignisse eine oder mehrere Bildaufnahmen von der Klebefläche zu erzeugen.

Die Bildaufnahmevorrichtung kann über eine Sendeeinheit verfügen. Die Sendeeinheit kann so ausgestaltet sein, dass sie Informationen z.B. über ein Mobilfunknetz (z.B. GSM: *Global System for Mobile Communications,* GPRS: *General Packet Radio Service;* UMTS: *Universal Mobile Telecommunications System,* LTE: *Long Term Evolution*)*,* über ein WLAN (*Wireless Local Artea Network*)*,* über Bluetooth, über DECT (*Digital Enhanced Cordless Telecommunications*) über ein Low-Power-Wide-Area-Netzwerk (*Low Power Wide Area Network* (LPWAN oder LPN)) wie beispielsweise ein NarrowBand IoT Netzwerk und/oder über eine Kombination aus verschiedenen Übertragungswegen an ein separates Computersystem übermittelt.

Die Sendeeinheit kann so ausgestaltet sein, dass sie Informationen über eine kurzreichweitige Funkverbindung (z.B. Bluetooth) an eine Basisstation übermittelt, von der die Informationen dann kabelgebunden und/oder über eine langreichweitige Funkverbindung (z.B. ein Mobilfunknetz) weitergeleitet werden.

In einer Ausführungsform der vorliegenden Offenbarung umfasst die Sendeeinheit ein Modem und eine Antenne zum Versenden von Informationen über ein GSM-, GPRS-, 2G-, 3G-, LTE-, 4G-, 5G-, 6G-Mobilfunknetzwerk oder über ein anderes Mobilfunknetzwerk.

Die Bildaufnahmen können analysiert werden. Eine solche Analyse kann ein Detektieren, Lokalisieren, Identifizieren und/oder Zählen von Gliederfüßern in den Bildaufnahmen umfassen.

Weitere Ausführungsformen der vorliegenden Offenbarung sind:
1. Faltbogen zum Erzeugen eines Gehäuses für eine Klebefläche, wobei der Faltbogen ein einstückiges, zusammenhängendes Gebilde ist, wobei der Faltbogen umfasst:
   - eine ebene Grundfläche,
   - eine Dachfläche,
   - mindestens eine Wandungsfläche,

   wobei die Dachfläche drei Teilflächen umfasst, eine erste Teilfläche, eine zweite Teilfläche und eine dritte Teilfläche,
   wobei eine erste Wandungsfläche über einen Falz an die Grundfläche angrenzt,
   wobei die zweite Teilfläche über einen Falz an die erste Wandungsfläche angrenzt,
   wobei die erste Teilfläche über einen Falz an die zweite Teilfläche angrenzt,
   wobei die dritte Teilfläche über einen Falz an die erste Teilfläche angrenzt.
   wobei erste Teilfläche eine Öffnung und/oder eine Perforation und/oder Stanzung und/oder Kerbung zum Erzeugen einer Öffnung umfasst.
2. Faltbogen gemäß der Ausführungsform 1, wobei die Öffnung in der ersten Teilfläche zumindest anteilig kreisförmig ist.
3. Faltbogen gemäß der Ausführungsform 1 oder 2, wobei die Grundfläche rechteckig ist und eine Größe von 180 mm x 230 mm bis 200 mm x 250 mm hat.
4. Faltbogen gemäß einer der Ausführungsform 1 bis 3, wobei die Zahl der Wandflächen 2, 3 oder 4 beträgt.
5. Faltbogen gemäß einer der Ausführungsform 1 bis 4, wobei die mindestens eine Wandfläche eine Öffnung und/oder eine Perforation und/oder Stanzung und/oder Kerbung zum Erzeugen einer Öffnung umfasst.
6. Faltbogen gemäß einer der Ausführungsform 1 bis 5, wobei die mindestens eine Wandfläche Perforationen und/oder Stanzungen und/oder Kerbungen umfasst, die potenzielle Öffnungen unterschiedlicher Größe definieren.
7. Faltbogen gemäß einer der Ausführungsform 1 bis 6, wobei die Dachfläche größer als die Grundfläche ist.
8. Faltbogen gemäß einer der Ausführungsform 1 bis 7, wobei der Faltbogen aus einer Kunststoffstegplatte gefertigt ist
9. Faltbogen gemäß einer der Ausführungsform 1 bis 8, wobei der Faltbogen eine Dicke von 2 bis 7 mm aufweist.
10. Faltbogen gemäß einer der Ausführungsform 1 bis 9, wobei der Faltbogen einen Transmissionsgrad für elektromagnetische Strahlung im sichtbaren Bereich von mehr als 50% aufweist.
11. Faltbogen gemäß einer der Ausführungsform 1 bis 10, wobei alle Falze parallel oder senkrecht zueinander verlaufen
12. Gehäuse zur Aufnahme einer Klebefläche, wobei das Gehäuse umfasst:
   - eine ebene Grundfläche,
   - eine Dachfläche,
   - mindestens eine Wandung,
      - wobei die mindestens eine Wandung an die Grundfläche und an die Dachfläche angrenzt,
      - wobei die Grundfläche, die mindestens eine Wandung und die Dachfläche ein Volumen eingrenzen,
      - wobei die Dachfläche drei Teilflächen umfasst, eine erste Teilfläche und zwei zweite Teilflächen, wobei die erste Teilfläche parallel zur Grundfläche verläuft und die zwei zweiten Teilflächen in einem Winkel von 5° bis 120° zur Grundfläche verlaufen,
      - wobei die erste Teilfläche eine Öffnung umfasst.
13. Gehäuse gemäß der Ausführungsform 12, wobei die Grundfläche rechteckig ist und eine Größe von 180 mm x 230 mm bis 200 mm x 250 mm hat.
14. Gehäuse gemäß einer der Ausführungsformen 12 oder 13, wobei die Zahl der Wandungen des Gehäuses 2, 3 oder 4 beträgt.
15. Gehäuse gemäß einer der Ausführungsformen 12 bis 14, wobei die Wandungen an gegenüberliegenden Seiten der rechteckigen Grundfläche angrenzen.
16. Gehäuse gemäß einer der Ausführungsformen 12 bis 15, wobei die mindestens eine Wandung mit der Grundfläche einen Winkel von 70° bis 110° einschließt.
17. Gehäuse gemäß einer der Ausführungsformen 12 bis 16, wobei die mindestens eine Wandung mit der Grundfläche einen Winkel von 90° bis 110° einschließt.
18. Gehäuse gemäß einer der Ausführungsformen 12 bis 17,wobei die Grundfläche rechteckig ist, das Gehäuse vier Wandungen umfasst, zwei erste Wandungen und zwei zweite Wandungen, wobei die ersten Wandungen an gegenüberliegenden Seiten der Grundfläche angrenzen und die zweiten Wandungen an den zwei anderen gegenüberliegenden Seiten der Grundfläche angrenzen, wobei die ersten Wandungen mit der Grundfläche einen Winkel von 90° bis 110° einschließen und wobei die zweiten Wandungen mit der Grundfläche einen Winkel von 85° bis 95° einschließen.
19. Gehäuse gemäß einer der Ausführungsformen 12 bis 18, wobei die mindestens eine Wandung eine oder mehreren Öffnungen umfasst.
20. Gehäuse gemäß einer der Ausführungsformen 12 bis 19, wobei die Dachfläche größer als die Grundfläche ist.
21. Gehäuse gemäß einer der Ausführungsformen 12 bis 20, wobei die Dachfläche einen Abstand zu der Grundfläche im Bereich von 5 cm bis 20 cm hat.
22. Gehäuse gemäß einer der Ausführungsformen 12 bis 21, wobei die Dachfläche einen Abstand zu der Grundfläche im Bereich von 8 cm bis 12 cm hat.
23. Gehäuse gemäß einer der Ausführungsformen 12 bis 22, wobei die Grundfläche größer als die erste Teilfläche ist.
24. Gehäuse gemäß einer der Ausführungsformen 12 bis 23, wobei die zwei zweiten Teilflächen eben sind und in einem Winkel von 5° bis 45° zur Grundfläche verlaufen.
25. Gehäuse gemäß einer der Ausführungsformen 12 bis 24, wobei die Dachfläche Teil eines Daches ist, das als Mansardenflachdach ausgestaltet ist.
26. Gehäuse gemäß einer der Ausführungsformen 12 bis 25, wobei die Öffnung in der ersten Teilfläche zumindest anteilig kreisförmig ist.
27. Gehäuse gemäß einer der Ausführungsformen 12 bis 26, wobei das Gehäuse aus einer Kunststoffstegplatte gefertigt ist.
28. Gehäuse gemäß einer der Ausführungsformen 12 bis 27, wobei das Gehäuse aus einem Faltbogen gemäß einem der Ansprüche 1 bis 11 gefertigt ist.
29. Gehäuse gemäß einer der Ausführungsformen 12 bis 28, wobei die Dachfläche und die mindestens eine Wandung einen Transmissionsgrad für elektromagnetische Strahlung im sichtbaren Bereich von mehr als 50% aufweist.
30. Gehäuse gemäß einer der Ausführungsformen 12 bis 29, wobei die Dachfläche über mindestens zwei Wandungen hinausragt.
31. System zum Überwachen von Gliederfüßern umfassend:
   - ein Gehäuse gemäß einem der Ansprüche 12 bis 30,
   - eine Klebefläche und
   - eine Bildaufnahmevorrichtung.
32. System gemäß Ausführungsform 31, wobei die Bildaufnahmevorrichtung oberhalb der Öffnung in der ersten Teilfläche platziert ist.
33. System gemäß Ausführungsform 31 oder 32, ferner umfassend ein Lockmittel für Gliederfüßer.
34. System gemäß einer der Ausführungsformen 31 bis 33, wobei die Klebefläche kleiner als die Grundfläche ist und eine Ausdehnung im Bereich von 100 mm x 200 mmm bis 200 mm x 250 mm hat.
35. Verfahren umfassend:
   - Bereitstellen eines Gehäuses gemäß einer der Ausführungsformen 12 bis 30,
   - Platzieren einer Klebefläche auf der ebenen Grundfläche innerhalb des Volumens,
   - Platzieren einer Bildaufnahmevorrichtung oberhalb der Öffnung der ersten Teilfläche.
36. Verfahren gemäß Ausführungsform 35, wobei das Bereitstellen des Gehäuses umfasst:
   - Erzeugen des Gehäuses aus einem Faltbogen gemäß einer der Ausführungsformen 1 bis 11.
37. Verfahren gemäß Ausführungsform 36, wobei das Bereitstellen des Gehäuses umfasst:
   - Herauslösen eines oder mehrerer Teile in der ersten Teilfläche und/oder der mindestens einen Wandfläche, die durch Perforationen, Stanzungen und/oder Kerbungen umgeben sind.
38. Verfahren gemäß einer der Ausführungsformen 35 bis 37, ferner umfassend:
   - Erzeugen einer Bildaufnahme von Gliederfüßern auf der Klebefläche.
39. Verfahren gemäß Ausführungsform 38, ferner umfassend:
   - Detektieren, Lokalisieren, Identifizieren und/oder Zählen der Gliederfüßer in der Bildaufnahme.

Die Gegenstände der vorliegenden Offenbarung werden nachfolgend anhand von Zeichnungen näher erläutert, ohne die Offenbarung auf die in den Zeichnungen gezeigten Merkmale und Merkmalskombinationen beschränken zu wollen.

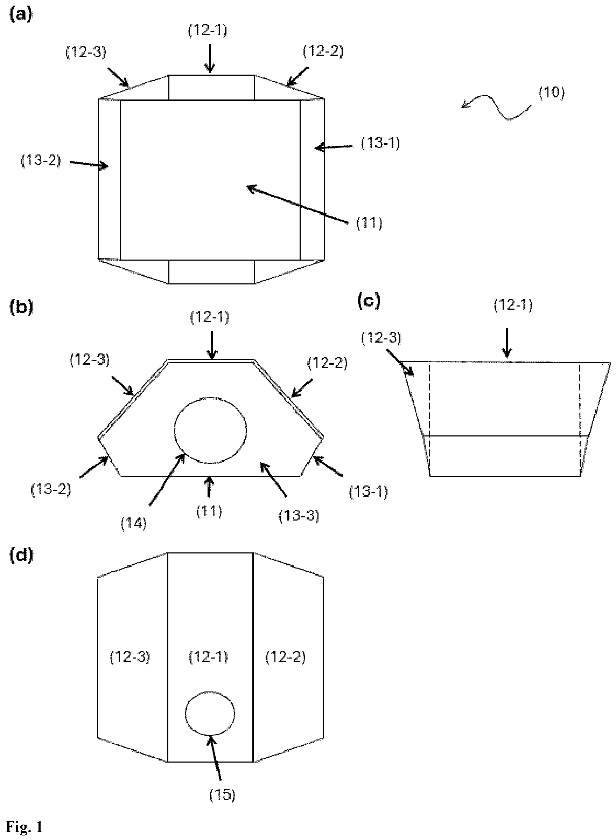

Fig. 1 zeigt schematisch eine Ausführungsform des Gehäuses der vorliegenden Offenbarung.

Fig. 1 zeigt das Gehäuse aus verschiedenen Perspektiven. Fig. 1(a) zeigt das Gehäuse von unten; Fig. 1(b) zeigt das Gehäuse von vorne, Fig. 1(c) zeigt das Gehäuse von einer Seite und Fig. 1(d) zeigt das Gehäuse von oben. Dabei definieren die Grundfläche und die Dachfläche, was unter "unten" und "oben" zu verstehen ist: Die Grundfläche ist Teil des Bodens des Gehäuses und bildet daher einen unteren Teil des Gehäuses. Im Fall von Fig. 1(a) befindet sich der Betrachter unterhalb des Gehäuses und schaut von unten in Richtung des Bodens des Gehäuses. Die Dachfläche ist Teil des Gehäusedaches und bildet daher einen oberen Teil des Gehäuses. Im Fall von Fig. 1(d) befindet sich der Betrachter oberhalb des Daches und schaut von oben auf das Dach. Im Fall von Fig. 1(b) wurde die Ansicht auf eine Öffnung innerhalb einer Wandung des Gehäuses willkürlich als Vorderansicht (Ansicht von vorn) bezeichnet. Die Rückansicht ist in Fig. 1 nicht dargestellt; es ist möglich, dass die Rückansicht der Vorderansicht entspricht. Im Fall von Fig. 1(c) wurde die Ansicht auf eine Wandung und eine sich daran anschließende Teilfläche des Daches willkürlich als Seitenansicht (Ansicht von einer Seite) bezeichnet. Fig. 1 umfasst keine Ansicht von der anderen Seite; es ist möglich, dass die Ansicht von der anderen Seite der in Fig. 1(c) gezeigten Seitenansicht entspricht.

Das in Fig. 1 gezeigte Gehäuse (10) umfasst eine ebene Grundfläche (11). Die ebene Grundfläche (11) hat eine rechteckige Form. An zwei gegenüberliegenden Seiten der Grundfläche (11) schließen sich zwei Wandungen (13-1, 13-2) an. Ferner ist in Fig. 1(b) eine weitere Wandung (13-3) zu erkennen, die eine Öffnung (14) aufweist. Durch diese Öffnung (14) können Gliederfüßer in das Innere des Gehäuses (10) gelangen.

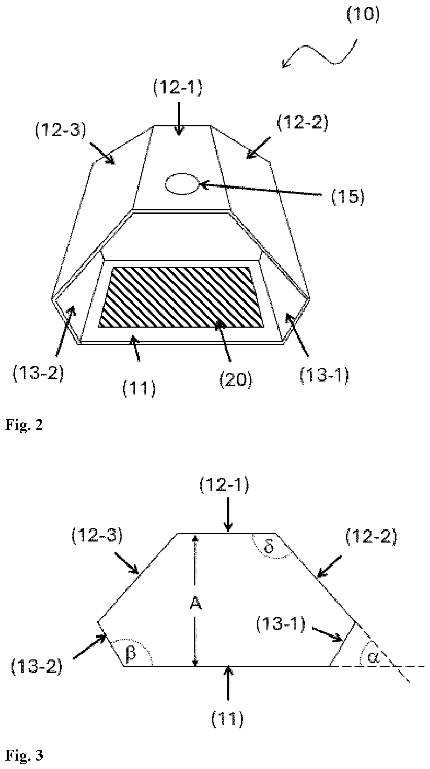

An jede Wandung (13-1, 13-2) schließt sich eine Teilfläche (12-2, 12-3) der Dachfläche an. Die Dachfläche umfasst insgesamt drei Teilflächen; eine erste Teilfläche (12-1) und zwei zweite Teilflächen (12-2, 12-3). Die erste Teilfläche (12-1) wird von den zwei zweiten Teilflächen (12-2, 12-3) eingeschlossen. Die erste Teilfläche (12-1) ist eben ausgeführt und verläuft parallel in einem Abstand zur Grundfläche (11). Die zwei zweiten Teilflächen (12-2, 12-3) sind ebenfalls eben ausgeführt; sie verlaufen jeweils in einem Winkel im Bereich von 5° bis 120° zur Grundfläche (11). Die Winkel sind in Fig. 3 dargestellt. Die Dachfläche überragt die Wandungen des Gehäuses.

In die erste Teilfläche (12-1) ist eine Öffnung eingebracht. Durch diese Öffnung kann elektromagnetische Strahlung aus dem Inneren des Gehäuses (10) nach außen treten.

Fig. 2 zeigt eine weitere Ausführungsform des Gehäuses der vorliegenden Offenbarung.

Fig. 2 zeigt das Gehäuse (10) in einer perspektivischen Darstellung von vorne und schräg oben. Das in Fig. 2 gezeigte Gehäuse (10) entspricht dem in Fig. 1 gezeigten Gehäuse (10), mit dem Unterschied, dass die Wandung (13-3) im Fall von Fig. 2 nicht vorhanden und/oder nicht dargestellt ist.

In Fig. 2 ist zu erkennen, dass die Grundfläche (11), die Wandungen (13-1, 13-2) und die Teilflächen (12-1, 12-2, 12-3) der Dachfläche ein Volumen definieren. Dieses Volumen ist der Innenbereich (das Innere) des Gehäuses. Dieser Innenbereich wird durch die Grundfläche (11), die Wandungen (13-1, 13-2) und die Teilflächen (12-1, 12-2, 12-3) geschützt.

Im Innenbereich befindet sich auf der Grundfläche (11) eine Klebefläche (20). Diese ist üblicherweise kein Bestandteil des Gehäuses, sondern kann in das Gehäuse eingebracht und wieder entfernt werden.

In Fig. 2 ist dargestellt, dass die Klebefläche (20) die gleiche Form wie die Grundfläche (11) aufweist (eben, rechteckig), wobei die Klebefläche (20) kleiner als die Grundfläche (11) ist.

Fig. 3 zeigt eine weitere Ausführungsform des Gehäuses der vorliegenden Offenbarung. Das in Fig. 3 gezeigte Gehäuse (10) entspricht dem in Fig. 1(b) gezeigten Gehäuse (10) in der Ansicht von vorn, mit dem Unterschied, dass die Wandung (13-3) im Fall von Fig. 3 nicht vorhanden und/oder nicht dargestellt ist.

In Fig. 3 ist dargestellt, dass die erste Teilfläche (12-1) der Dachfläche in einem Abstand A parallel zur Grundfläche (11) verläuft.

Die zweite Teilfläche (12-2) der Dachfläche verläuft in einem Winkel α zur Grundfläche (11). Der Winkel α liegt im Bereich von 5° bis 120°. In der in Fig. 3 dargestellten Ausführungsform ist der Winkel α kleiner als 90°. In der in Fig. 3 dargestellten Ausführungsform liegt der Winkel α im Bereich von 40 bis 60°. Da das in Fig. 3 gezeigte Gehäuse symmetrisch ist, entspricht der Winkel zwischen der dritten Teilfläche (12-3) und der Grundfläche (11) dem Winkel α.

Der Winkel 8 zwischen der ersten Teilfläche (12-1) und der zweiten Teilfläche (12-2) ist mit dem Winkel α verknüpft; es gilt: α+δ= 180.

Der Winkel β zwischen der zweiten Wandfläche (13-2) und der Grundfläche (11) liegt üblicherweise im Bereich von 20° bis 160°. In der in Fig. 3 dargestellten Ausführungsform ist der Winkel β größer als 90°. In der in Fig. 3 dargestellten Ausführungsform liegt der Winkel β im Bereich von 120° bis 140°.

Da das in Fig. 3 gezeigte Gehäuse symmetrisch ist, entspricht der Winkel zwischen der ersten Wandfläche (12-1) und der Grundfläche (11) dem Winkel β.

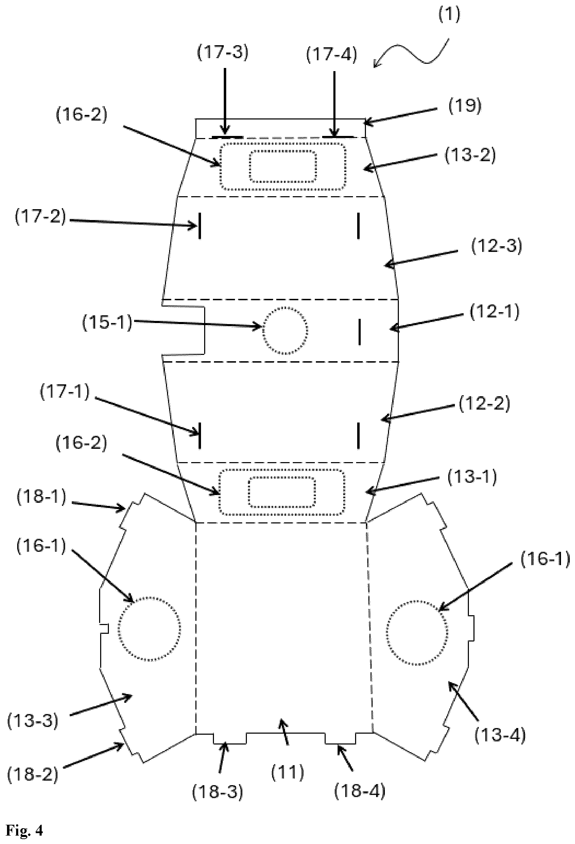

Fig. 4 zeigt schematisch eine Ausführungsform des Faltbogens der vorliegenden Offenbarung.

Der Faltbogen (1) ist ein einstückiges, zusammenhängendes, flächiges Gebilde. Der Faltbogen (1) umfasst eine Grundfläche (11). Die Grundfläche (11) hat eine rechteckige Grundform; an einer Seite der Grundfläche (11) sind Laschen (18-3, 18-4) vorhanden, die zur Fixierung der Teile des Faltbogens im Fall des Erzeugens eines Gehäuses aus dem Faltbogen (1) dienen. Die Grundfläche (11) des Faltbogens (1) bildet die Grundfläche des späteren Gehäuses. An zwei gegenüberliegenden Seiten der Grundfläche (11) grenzen zwei Wandflächen (13-3, 13-4) an.

Die Grundfläche (11) ist über zwei Falze mit den Wandflächen (13-3, 13-4) verbunden. Falze sind in Fig. 4 durch gestrichelte Linien dargestellt. In jede der Wandflächen (13-3, 13-4) sind Stanzungen, Perforationen und/oder Einkerbungen (16-1) eingebracht, die es erlauben, das von den Stanzungen, Perforationen und/oder Einkerbungen (16-1) umgebene Teil der Wandfläche durch Herausdrücken zu entfernen, so dass eine Öffnung entsteht. Durch eine solche Öffnung können Gliederfüßer in das Innere des Gehäuses, zu dem der Faltbogen (1) zusammengesetzt werden kann, gelangen.

Stanzungen, Perforationen und/oder Einkerbungen sind in Fig. 4 durch gepunktete Linien dargestellt.

Die Wandflächen (13-3, 13-4) weisen Laschen (18-1, 18-2) auf. Der Übersichtlichkeit halber sind in Fig. 4 nur die Laschen (18-1, 18-2) der Wandfläche (13-3) mit Bezugszeichen versehen.

An eine weitere Seite der Grundfläche (11) schließt sich eine weitere Wandfläche (13-1) an, die in dieser Offenbarung als erste Wandfläche bezeichnet wird. Die Grundfläche (11) ist mit der ersten Wandfläche (13-1) über einen Falz verbunden. In die erste Wandfläche (13-1) sind Stanzungen, Perforationen und/oder Einkerbungen (16-2) eingebracht, die es erlauben, Teile aus der ersten Wandfläche (13-1) herauszulösen, um eine Öffnung entstehen zu lassen. Im Fall der ersten Wandfläche (13-1) kann ein Nutzer entscheiden, ob er das innen liegende, kleinere Teil aus der ersten Wandfläche (13-1) herauslösen möchte oder das größere Teil aus der ersten Wandfläche (13-1) herauslösen möchte. Damit kann der Nutzer die Größe der sich ergebenden Öffnung wählen.

An die erste Wandfläche (13-1) schließt sich eine Teilfläche (12-2) der Dachfläche an. Diese Teilfläche (12-2) wird in dieser Offenbarung als die zweite Teilfläche bezeichnet. Die zweite Teilfläche (12-2) ist mit der ersten Wandfläche (13-1) über einen Falz verbunden. Der Falz befindet sich auf der gegenüberliegenden Seite, mit der die zweite Wandfläche (13-2) an die Grundfläche (11) anschließt.

Alle in Fig. 4 gezeigten Falze verlaufen parallel oder senkrecht zueinander.

In die zweite Teilfläche (12-2) sind Schlitze eingebracht. Der Übersichtlichkeit halber ist nur ein Schlitz (17-1) mit einem Bezugszeichen versehen. In den Schlitz (17-1) kann beim Zusammenfügen des Faltbogens zu einem Gehäuse die Lasche (18-1) der Wandfläche (13-3) eingebracht werden, um die Wandfläche (13-3) mit der zweiten Teilfläche (12-2) mechanisch zu verbinden.

An die zweite Teilfläche (12-2) schließt sich eine weitere Teilfläche (12-1) der Dachfläche an, die in dieser Offenbarung als die erste Teilfläche bezeichnet wird.

Die erste Teilfläche (12-1) umfasst eine Stanzung, Perforation und/oder Einkerbung (15-1). Der durch die Stanzung, Perforation und/oder Einkerbung (15-1) umgebende Teil der ersten Teilfläche (12-1) kann aus der ersten Teilfläche (12-1) herausgelöst werden, so dass eine Öffnung entsteht. Oberhalb dieser Öffnung kann eine Bildaufnahmevorrichtung platziert werden.

An die erste Teilfläche (12-1) schließt sich eine dritte Teilfläche (12-3) der Dachfläche an. Die erste Teilfläche (12-1) ist über einen Falz mit der dritten Teilfläche (12-3) verbunden.

Die dritte Teilfläche (12-3) ist wie die zweite Teilfläche (12-2) aufgebaut; mit anderen Worten: die dritte Teilfläche (12-3) entspricht der zweiten Teilfläche (12-2).

An die dritte Teilfläche (12-3) schließt sich eine weitere Wandfläche (13-2) an. Die Wandfläche (13-2) entspricht der ersten Wandfläche (13-1).

An die Wandfläche (13-2) schließt sich ein Endstück (19) an. Das Endstück (19) ist mit der Wandfläche (13-2) über einen Falz verbunden. In den Falz sind zwei Schlitze (17-3, 17-4) eingebracht, in die die Laschen (18-3, 18-4) der Grundfläche (11) eingebracht werden können.

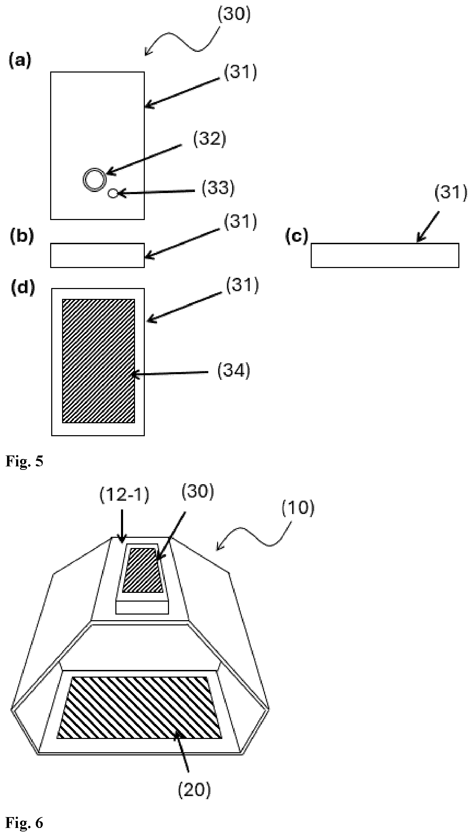

Fig. 5 zeigt schematisch eine Ausführungsform einer Bildaufnahmevorrichtung. Die Bildaufnahmevorrichtung (30) ist in Fig. 3(a) von unten, in Fig. 3(b) von vorne, in Fig. 3(c) von der Seite und in Fig. 3(d) von oben dargestellt. Dabei ist die Bildaufnahmevorrichtung (30) so ausgerichtet, wie sie in dem System zum Überwachen von Gliederfüßern verwendet wird (siehe Fig. 6).

Die Bildaufnahmevorrichtung (30) umfasst einen Körper (31), der als Gehäuse für eine Kamera dient. Der Körper (31) weist eine Öffnung auf, in die ein Kameraobjektiv (32) eingefasst ist. Neben dem Kameraobjektiv (32) befindet sich eine Beleuchtungseinheit (33) in Form einer Blitz-LED (LED: Lichtemittierende Diode). In den Körper (31) ist ferner ein Solarmodul (34) eingebracht, um einen Akkumulator, der sich im Inneren des Körpers (31) befindet (und daher in Fig. 5 nicht zu erkennen ist), aufzuladen.

Fig. 6 zeigt schematisch eine Ausführungsform des Systems der vorliegenden Offenbarung zum Überwachen von Gliederfüßern.

Das System umfasst ein Gehäuse (10). Dabei handelt es sich um das Gehäuse, das bereits in Fig. 2 dargestellt ist. Das System umfasst ferner eine Klebefläche (20), die in das Gehäuse (10) eingebracht ist. Das System umfasst ferner eine Bildaufnahmevorrichtung (30). Dabei handelt es sich um die Bildaufnahmevorrichtung, die bereits in Fig. 5 dargestellt ist. Die Bildaufnahmevorrichtung (30) ist auf der ersten Teilfläche (12-1) der Dachfläche angebracht. Dabei ist das Kameraobjektiv der Bildaufnahmevorrichtung (30) oberhalb der Öffnung in der ersten Teilfläche (12-1) der Dachfläche platziert, so dass elektromagnetische Strahlung, die von der Klebefläche (20) reflektiert, gestreut und/oder gebeugt wird, durch die Öffnung und das Kameraobjektiv auf einen Bildsensor der Kamera treffen kann. Dies ergibt sich aus einem Vergleich der Figuren 2, 5 und 6.

## Patentansprüche

1. Faltbogen zum Erzeugen eines Gehäuses für eine Klebefläche, wobei der Faltbogen ein einstückiges, zusammenhängendes Gebilde ist, wobei der Faltbogen umfasst:
- eine ebene Grundfläche,
- eine Dachfläche,
- mindestens eine Wandungsfläche,
wobei die Dachfläche drei Teilflächen umfasst, eine erste Teilfläche, eine zweite Teilfläche und eine dritte Teilfläche,
wobei eine erste Wandungsfläche über einen Falz an die Grundfläche angrenzt,
wobei die zweite Teilfläche über einen Falz an die erste Wandungsfläche angrenzt,
wobei die erste Teilfläche über einen Falz an die zweite Teilfläche angrenzt,
wobei die dritte Teilfläche über einen Falz an die erste Teilfläche angrenzt.
wobei erste Teilfläche eine Öffnung und/oder eine Perforation und/oder Stanzung und/oder Kerbung zum Erzeugen einer Öffnung umfasst.

2. Faltbogen gemäß Anspruch 1, wobei die mindestens eine Wandfläche eine Öffnung und/oder eine Perforation und/oder Stanzung und/oder Kerbung zum Erzeugen einer Öffnung umfasst und/oder Perforationen und/oder Stanzungen und/oder Kerbungen umfasst, die potenzielle Öffnungen unterschiedlicher Größe definieren.

3. Faltbogen gemäß einem der Ansprüche 1 oder 2, wobei der Faltbogen aus einer Kunststoffstegplatte gefertigt ist und eine Dicke von 2 bis 7 mm aufweist.

4. Faltbogen gemäß einem der Ansprüche 1 bis 3, wobei der Faltbogen einen Transmissionsgrad für elektromagnetische Strahlung im sichtbaren Bereich von mehr als 50% aufweist.

5. Faltbogen gemäß einem der Ansprüche 1 bis 4, wobei alle Falze parallel oder senkrecht zueinander verlaufen.

6. Gehäuse zur Aufnahme einer Klebefläche, wobei das Gehäuse umfasst:
- eine ebene Grundfläche,
- eine Dachfläche,
- mindestens eine Wandung,
• wobei die mindestens eine Wandung an die Grundfläche und an die Dachfläche angrenzt,
• wobei die Grundfläche, die mindestens eine Wandung und die Dachfläche ein Volumen eingrenzen,
• wobei die Dachfläche drei Teilflächen umfasst, eine erste Teilfläche und zwei zweite Teilflächen, wobei die erste Teilfläche parallel zur Grundfläche verläuft und die zwei zweiten Teilflächen in einem Winkel von 5° bis 120° zur Grundfläche verlaufen,
• wobei die erste Teilfläche eine Öffnung umfasst.

7. Gehäuse gemäß Anspruch 6, wobei die Grundfläche rechteckig ist und eine Größe von 180 mm x 230 mm bis 200 mm x 250 mm hat.

8. Gehäuse gemäß einem der Ansprüche 6 oder 7, wobei die Grundfläche rechteckig ist, das Gehäuse vier Wandungen umfasst, zwei erste Wandungen und zwei zweite Wandungen, wobei die ersten Wandungen an gegenüberliegenden Seiten der Grundfläche angrenzen und die zweiten Wandungen an den zwei anderen gegenüberliegenden Seiten der Grundfläche angrenzen, wobei die ersten Wandungen mit der Grundfläche einen Winkel von 90° bis 110° einschließen und wobei die zweiten Wandungen mit der Grundfläche einen Winkel von 85° bis 95° einschließen.

9. Gehäuse gemäß einem der Ansprüche 6 bis 8, wobei die mindestens eine Wandung eine oder mehreren Öffnungen umfasst.

10. Gehäuse gemäß einem der Ansprüche 6 bis 9, wobei die Dachfläche einen Abstand zu der Grundfläche im Bereich von 8 cm bis 12 cm hat.

11. Gehäuse gemäß einem der Ansprüche 6 bis 10, wobei die zwei zweiten Teilflächen eben sind und in einem Winkel von 5° bis 45° zur Grundfläche verlaufen.

12. Gehäuse gemäß einem der Ansprüche 6 bis 11, wobei die Dachfläche Teil eines Daches ist, das als Mansardenflachdach ausgestaltet ist.

13. Gehäuse gemäß einem der Ansprüche 6 bis 12, wobei das Gehäuse aus einem Faltbogen gemäß einem der Ansprüche 1 bis 5 gefertigt ist.

14. Gehäuse gemäß einem der Ansprüche 6 bis 13, wobei die Dachfläche über mindestens zwei Wandungen hinausragt.

15. System zum Überwachen von Gliederfüßern umfassend:
- ein Gehäuse gemäß einem der Ansprüche 6 bis 14,
- eine Klebefläche und
- eine Bildaufnahmevorrichtung.

16. System gemäß Anspruch 15, wobei die Bildaufnahmevorrichtung oberhalb der Öffnung in der ersten Teilfläche platziert ist.

17. Verfahren umfassend:
- Bereitstellen eines Gehäuses gemäß einem der Ansprüche 6 bis 14,
- Platzieren einer Klebefläche auf der ebenen Grundfläche innerhalb des Volumens,
- Platzieren einer Bildaufnahmevorrichtung oberhalb der Öffnung der ersten Teilfläche.

18. Verfahren gemäß Anspruch 17, wobei das Bereitstellen des Gehäuses umfasst:
- Erzeugen des Gehäuses aus einem Faltbogen gemäß einem der Ansprüche 1 bis 5.
